# EUROPEAN PATENT APPLICATION

(11) **EP 4 366 005 A1**
(43) Date of publication of application: **08.05.2024**
(21) Application number: 23205979.0
(22) Date of filing: 26.10.2023
(51) Int. Cl.: H01M 8/04089, H01M 8/04303, H01M 8/0438, H01M 8/04537, H01M 8/04664, H01M 8/04746

(54) **CONTROLLING PRESSURE IN A FUEL CELL SYSTEM**

(30) Priority: 27.10.2022 SE 2251245
(71) Applicant: VOLVO TRUCK CORPORATION, 405 08 Göteborg (SE)
(72) Inventor: ARYA, Pranav, 412 85 Göteborg (SE); BLANC, Ricard, 431 68 Mölndal (SE)
(74) Representative: Valea AB

(57) **Abstract**

Systems and methods for controlling operation of a fuel cell system in a vehicle. Pressures at one or more of an anode side, a cathode side, and a coolant subsystem are controlled to be maintained within a pressure corridor during a normal operation of the fuel cell system. At an emergency shutdown, pressure at an anode side is controlled. A method of controlling operation of a fuel cell system comprises detecting a shutdown of the fuel cell system, determining whether the shutdown is an emergency shutdown, and, responsive to determination that the shutdown is the emergency shutdown, controlling a degree of opening of an anode purge valve, positioned at an anode outlet path extending between an anode outlet and a cathode outlet path, based on availability of pressure sensor data and/or a power level at which the fuel cell system was operating at a time when the emergency shutdown was detected.

## Description

### TECHNICAL FIELD

The disclosure relates generally to controlling pressure of media in a fuel cell system. In particular aspects, the disclosure relates to controlling hydrogen pressure in the fuel cell system in a vehicle.

The disclosure can be applied in heavy-duty vehicles, such as trucks, buses, and construction equipment. Although the disclosure may be described with respect to a particular vehicle, the disclosure is not restricted to any particular vehicle.

### BACKGROUND

A fuel cell system operates using different media flows such as hydrogen of a hydrogen subsystem, air of an air subsystem, and coolant of a coolant subsystem. The hydrogen subsystem provides hydrogen to an anode of a fuel cell stack of the fuel cell system, and is controlled to adjust pressure and flow of the hydrogen in the fuel cell stack. The air subsystem provides air, or oxygen, to a cathode of the fuel cell stack, and is controlled to adjust pressure and flow of the air in the fuel cell stack. And the cooling subsystem operates to maintain a temperature of the fuel cell system at an appropriate level.

A general goal in operating the fuel cell system, e.g., in a vehicle, is to avoid large pressure differences among the three media. Indeed, a high cross pressure, such as a relative pressure difference among hydrogen, air and coolant pressures in the stack inside the fuel cell system, can result in stresses in a bipolar plate of a fuel cell stack, which may lead to cracks or other damage in the bipolar plate which in turn can cause a sudden failure of the fuel cell system. Pressure spikes may occur at a shutdown of a fuel cell system, particularly at sudden, not planned and thus less controlled shutdowns. Among other issues associated with fuel cell system shutdowns such as dependence of the durability and longevity of a fuel cell system on a number of shutdowns it experiences, changes in pressures in the hydrogen, air, and coolant media present an issue. In particular, a pressure on the anode side of the fuel cell stack may remain high if a fuel cell system is shut down in a very fast manner, thus causing a high cross pressure which can lead to failures in the fuel cell system.

Accordingly, there exist a need in addressing the challenge of controlling and adjusting pressures of various media used in fuel cell systems.

### SUMMARY

According to an aspect of the disclosure, a method of controlling operation of a fuel cell system comprising a fuel cell stack for generating power and comprising an anode side and a cathode side is provided. The method comprises detecting a shutdown of the fuel cell system; determining whether the shutdown is an emergency shutdown; and responsive to determination that the shutdown is the emergency shutdown, controlling a degree of opening of an anode purge valve, that is positioned at an anode outlet path extending between an anode outlet of the anode side and a cathode outlet path, based on availability of pressure sensor data when the pressure sensor data is available and/or based on a power level at which the fuel cell system was operating at a time when the emergency shutdown was detected. The pressure sensor data is acquired from a first pressure sensor acquiring pressure measurements at the anode side, a second pressure sensor acquiring pressure measurements at the cathode side, and a third pressure sensor acquiring pressure measurements at a coolant subsystem of the fuel cell system.

A technical benefit may include reducing or minimizing a potential damage to a fuel cell system that would otherwise occur due to a high hydrogen pressure at an anode side at an emergency shutdown.

In some examples, the method comprises, responsive to availability of the pressure sensor data i.e. when the pressure sensor data is available, controlling the degree of opening of the anode purge valve based on the pressure sensor data by: comparing a cross-pressure value to a cross-pressure threshold, wherein the cross-pressure value is determined based on the pressure sensor data; responsive to determination that the cross-pressure value is greater than the cross-pressure threshold, controlling the degree of opening of the anode purge valve by causing the anode purge valve to partially open to thereby cause first pressure at the anode side to reduce which causes the cross-pressure value to reduce below the cross-pressure threshold; and, responsive to determination that the cross-pressure value is smaller than the cross-pressure threshold, controlling the degree of opening of the anode purge valve by keeping the anode purge valve closed.

In some examples, the method comprises, responsive to availability of the pressure sensor data, controlling the degree of opening of the anode purge valve and a degree of opening of a drain valve based on the pressure sensor data by: comparing a cross-pressure value to a cross-pressure threshold and to a second cross-pressure threshold, wherein the cross-pressure value is determined based on the pressure sensor data; responsive to determination that the cross-pressure value is smaller than the cross-pressure threshold, controlling the degree of opening of the anode purge valve by keeping the anode purge valve closed; responsive to determination that the cross-pressure value is greater than the cross-pressure threshold and smaller than the second cross-pressure threshold, controlling the degree of opening of only the anode purge valve among the anode purge and drain valves by causing the anode purge valve to at least partially open; and responsive to determination that the cross-pressure value is greater than the second cross-pressure threshold, controlling the degree of opening of the anode purge valve by causing the anode purge valve to fully open and controlling the degree of opening of the drain valve by causing the drain valve to at least partially open.

In some examples, the cross-pressure threshold is determined dynamically, based on at least one of a state of health, SoH, of the fuel cell system and historical usage data on the fuel cell system.

In some examples, the cross-pressure threshold is used to define an upper pressure value and a lower pressure value of a pressure corridor.

In some examples, the method comprises controlling the degree of opening of the anode purge valve by causing the anode purge valve to partially open to cause the first pressure at the anode side to remain below the upper pressure value of the pressure corridor and above the lower pressure value of the pressure corridor.

In some examples, the upper pressure value comprises a maximum allowed cross pressure for a lowest pressure selected from the first pressure at the anode side, second pressure at the cathode side, and third pressure at the coolant subsystem.

In some examples, the lower pressure value comprises a maximum allowed cross pressure for a highest pressure selected from the first pressure at the anode side, second pressure at the cathode side, and third pressure at the coolant subsystem.

In some examples, the second cross-pressure threshold is determined based on the cross-pressure threshold.

In some examples, prior to detecting the shutdown, the fuel cell system is controlled to keep the first pressure at the anode side within the pressure corridor, to keep the second pressure at the cathode side within the pressure corridor, and to keep the third pressure at the coolant subsystem within the pressure corridor.

In some examples, the method comprises, responsive to unavailability of the pressure sensor data when the pressure sensor data is not available, controlling the degree of opening of the anode purge valve based on the power level at which the fuel cell system was operating at the time when the emergency shutdown was detected, the controlling comprising: comparing the power level to a threshold power level; responsive to determination that the power level is greater than the threshold power level, controlling the degree of opening of the anode purge valve by causing the anode purge valve to fully open; and responsive to determination that the power level is smaller than the threshold power level, controlling the degree of opening of the anode purge valve by keeping the anode purge valve closed.

In some examples, the threshold power level is determined dynamically, based on at least one of a state of health, SoH, of the fuel cell system and historical usage data on the fuel cell system.

In some examples, the method further comprises, responsive to unavailability of the pressure sensor data, controlling the degree of opening of the anode purge valve and a degree of opening of a drain valve based on the power level at which the fuel cell system was operating at the time when the emergency shutdown was detected, the controlling comprising: comparing the power level to a first threshold power level and to a second threshold power level that is greater than the first threshold power level; responsive to determination that the power level is smaller than the first threshold power level, controlling the degree of opening of the anode purge valve by keeping the anode purge valve closed; responsive to determination that the power level is greater than the first threshold power level and smaller than the second threshold power level, controlling the degree of opening of only the anode purge valve among the anode purge and drain valves by causing the anode purge valve to fully partially open; and responsive to determination that the power level is greater than the second threshold power level, controlling the degree of opening of the anode purge valve by causing the anode purge valve to fully open and controlling the degree of opening of the drain valve by causing the drain valve to at least partially open.

In some examples, the first threshold power level and the second threshold power level are determined dynamically, based on at least one of a state of health, SoH, of the fuel cell system and historical usage data on the fuel cell system.

According to an aspect of the present disclosure, a method of controlling operation of a fuel cell system comprising a fuel cell stack for generating power and comprising an anode side and a cathode side is provided. The method comprises acquiring first pressure measurements from at least one first pressure sensor at the anode side, second pressure measurements from at least one second pressure sensor at the cathode side, and third pressure measurements from at least one third pressure sensor at a coolant subsystem of the fuel cell system; and controlling the fuel cell system to keep a first pressure sensor at the anode side within the pressure corridor, keep a second pressure at the cathode side within the pressure corridor, and keep a third pressure at the coolant subsystem within a pressure corridor that comprises pressure values in a range between an upper pressure value and a lower pressure value. The upper pressure value and the lower pressure value of the pressure corridor are determined dynamically, based on at least one of a state of health, SoH, of the fuel cell system and historical usage data on the fuel cell system.

In some examples, the method further comprises controlling a degree of opening of an anode purge valve, that is positioned at an anode outlet path extending between an anode outlet of the anode side and a cathode outlet path, to keep the first pressure at the anode side within the pressure corridor.

In some examples, a difference between the lower pressure value and the upper pressure value decreases with a decrease in the state of health of the fuel cell system.

In some examples, the upper pressure value comprises a maximum allowed cross pressure for a lowest pressure selected from the first pressure at the anode side, the second pressure at the cathode side, and the third pressure at the coolant subsystem. '

In some examples, the lower pressure value comprises a maximum allowed cross pressure for a highest pressure selected from the first pressure at the anode side, the second pressure at the cathode side, and the third pressure at the coolant subsystem.

In some examples, a control system is provided that is configured to perform any method of controlling operation of the fuel cell system in accordance with aspects of the present disclosure. The control system may provide one or more control units. In some examples, a fuel cell system comprising the control unit is provided. In some examples, a fuel cell system that is configured to communicate with the control unit is provided. In some examples, a fuel cell vehicle comprising the fuel cell system is provided. In some example, a fuel cell vehicle comprising the fuel cell system and/or being in communication with the control unit is provided.

In some examples, a computer program product is provided that comprises instructions, which, when executed on at least one processor, cause the at least one processor to carry out the method of controlling operation of the fuel cell system in accordance with aspects of the present disclosure.

In some examples, a computer-readable storage medium is provided, the computer-readable storage medium having stored thereon a computer program product comprising instructions which, when executed on at least one processor, cause the at least one processor to carry out the method of controlling operation of the fuel cell system in accordance with aspects of the present disclosure.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control systems, units, computer readable media, and computer program products associated with the above discussed technical benefits.

### BRIEF DESCRIPTION OF THE DRAWINGS

With reference to the appended drawings, below follows a more detailed description of aspects of the disclosure cited as examples.
**FIG. 1** is a side view of an example of a vehicle comprising a fuel cell system in which a method in accordance with aspects of the present disclosure may be implemented.
**FIG. 2** is a diagram illustrating an example of a fuel cell system in which a method in accordance with aspects of the present disclosure may be implemented.
**FIG. 3** is a diagram illustrating an example of a method of controlling a fuel cell system, in accordance with aspects of the present disclosure.
**FIG. 4A** is a diagram illustrating another example of a method of controlling a fuel cell system, in accordance with aspects of the present disclosure.
**FIG. 4B** is a diagram illustrating another example of a method of controlling a fuel cell system, in accordance with aspects of the present disclosure.
**FIG. 5** is a diagram illustrating an example of a method of controlling a fuel cell system during its normal operation, in accordance with aspects of the present disclosure.
**FIG. 6** is a graph illustrating an example of a pressure corridor, in accordance with aspects of the present disclosure.
**FIG. 7** is a graph illustrating pressures at an anode side, cathode side, and coolant side an emergency shutdown.
**FIG. 8** is a graph illustrating pressures at an anode side, cathode side, and coolant side an emergency shutdown, in accordance with aspects of the present disclosure.
**FIG. 9A** is a graph illustrating control of an anode purge valve based on a power level at which the fuel cell system in operating, in accordance with aspects of the present disclosure.
**FIG. 9B** is a graph illustrating control of an anode purge valve and a drain valve based on a power level at which the fuel cell system in operating, in accordance with aspects of the present disclosure.
**FIGs. 10A** and **10B** are diagrams illustrating an example of a control system which may perform a method in accordance with aspects of the present disclosure.

### DETAILED DESCRIPTION

Aspects set forth below represent the necessary information to enable those skilled in the art to practice the disclosure.

A fuel cell system typically cannot be shut down very fast without damaging the system. Indeed, even a normal, controlled shutdown contributes to a degradation of the fuel cell system. Thus, in general, the greater the number of shutdowns, and thus start-ups, that the fuel cell system undergoes, the shorter a remaining lifetime of the fuel cell system is. An emergency shutdown, which can be triggered due to a fault in the system or in the vehicle, carries a much higher risk of damage to the fuel cell system. Thus, a high cross-pressure, e.g., that occurs during an emergency shutdown of the fuel cell system, may lead to a sudden failure of the fuel cell system due to cracks or other damages in the bipolar plate of the fuel cell stack. When a fuel cell system is shut down in an immediate, e.g., very fast, manner, pressures at the air or cathode side and in the coolant subsystem are typically reduced quickly. However, the pressure on the hydrogen or anode side remains high thereby causing a high cross pressure which can lead to failures.

Methods and systems in accordance with aspects of the present disclosure allow reducing or eliminating the risk of damage to the fuel cell system, by causing the hydrogen pressure to reduce in a fast manner at an emergency shutdown.

In an aspect, a method of controlling operation of a fuel cell system comprising a fuel cell stack for generating power and comprising an anode side and a cathode side is provided. The method comprises detecting a shutdown of the fuel cell system; determining (304) whether the shutdown is an emergency shutdown; and, responsive to determination that the shutdown is the emergency shutdown, controlling a degree of opening of an anode purge valve, that is positioned at an anode outlet path extending between an anode outlet of the anode side and a cathode outlet path, based on availability of pressure sensor data when the pressure sensor data is available and/or based on a power level at which the fuel cell system was operating at a time when the emergency shutdown was detected. The power level may be defined as amount of power that is supplied from the fuel cell system to the vehicle and/or its auxiliaries, i.e. the total power produced by the fuel cell stack minus the power that is consumed by the fuel cell system's balance-of-plant (BoP), such as pumps, compressor, valves, sensors, fittings, piping, etc. In some cases, the power level may be defined as the total power produced by the stack without subtracting the consumption of the BoP. The pressure sensor data may be acquired from a first pressure sensor acquiring pressure measurements at the anode side, a second pressure sensor acquiring pressure measurements at the cathode side, and a third pressure sensor acquiring pressure measurements at a coolant subsystem of the fuel cell system. Each of the first, second, and third sensors may comprise one or more sensors devices.

In an aspect, a method of controlling operation of a fuel cell system comprising a fuel cell stack for generating power and comprising an anode side and a cathode side is provided. The method comprises detecting a shutdown of the fuel cell system; determining whether the shutdown is an emergency shutdown; and, responsive to determination that the shutdown is the emergency shutdown, controlling a degree of opening of the anode purge valve based on pressure sensor data. The pressure sensor data is acquired from a first pressure sensor acquiring pressure measurements at the anode side, a second pressure sensor acquiring pressure measurements at the cathode side, and a third pressure sensor acquiring pressure measurements at a coolant subsystem of the fuel cell system.

In an aspect, a method of controlling operation of a fuel cell system comprising a fuel cell stack for generating power and comprising an anode side and a cathode side is provided. The method comprises detecting a shutdown of the fuel cell system; determining whether the shutdown is an emergency shutdown; and, responsive to determination that the shutdown is the emergency shutdown, controlling a degree of opening of the anode purge valve based on a power level at which the fuel cell system was operating at a time when the emergency shutdown was detected.

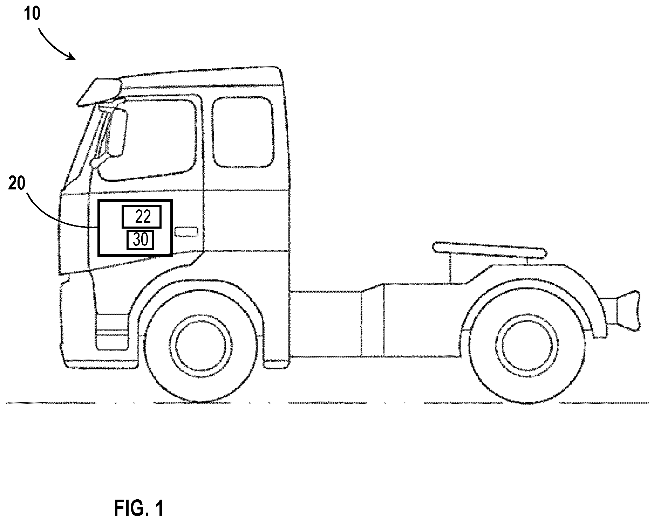

**FIG. 1** is a side view of an example of a vehicle 10 comprising a fuel cell system 20 in which a method in accordance with aspects of the present disclosure may be implemented. The vehicle 10 is shown as a truck, such as a heavy-duty truck. It should however be appreciated that the present disclosure is not limited to this, or any other specific type of vehicle, and may be used in any other type of vehicle, such as a bus, construction equipment, e.g. a wheel loader and an excavator, a passenger car, an aircraft, and a marine vessel. The present disclosure is also applicable for other applications not relating to vehicles as long as a fuel cell system and a control unit or controller for controlling pressure in accordance with aspects of the present disclosure are utilized.

As shown schematically in FIG. 1, the vehicle 10 comprises a fuel cell system 20 which may be used for powering one or more electric motors (not shown) which are used for creating a propulsion force to the vehicle 10. The fuel cell system 20 may additionally or alternatively be used for powering other electric power consumers (not shown) of the vehicle 10, such as an electric motor for a crane, an electric motor for a refrigerator system, an electric motor for an air conditioning system, or any other electric power consuming function of the vehicle 10.

The fuel cell system 20 comprises one or more, typically multiple, fuel cells which together form a fuel cell stack 22. The fuel cell system 20 may include one or more fuel cell stacks. Also, the fuel cell system 20 may comprise one or more fuel cell systems, such that the vehicle 10 may have multiple fuel cell systems, e.g., two or more fuel cell systems.

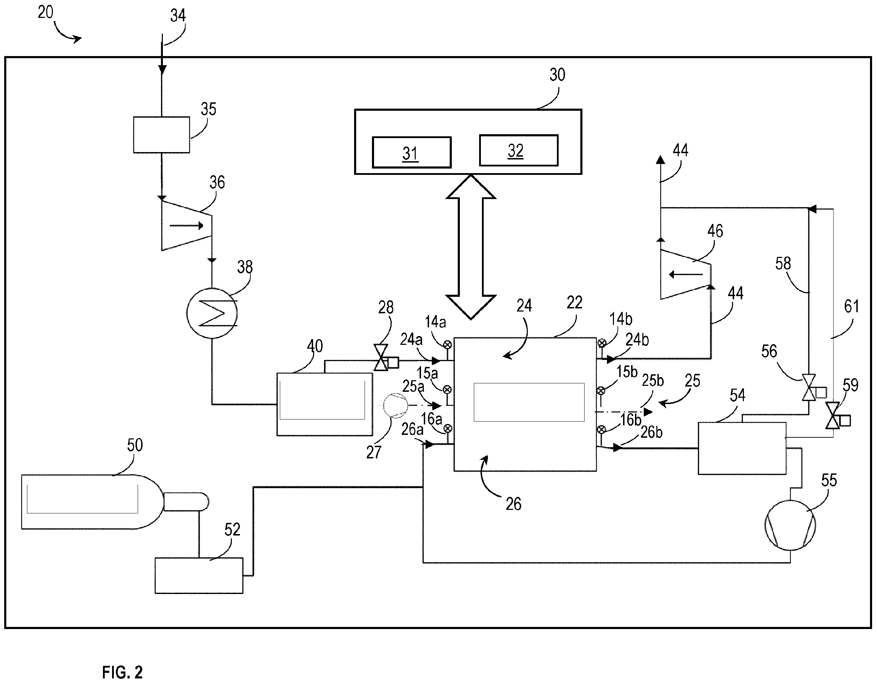

The fuel cell system 20 is configured to provide the fuel cells with necessary supply of hydrogen fuel (H₂) and oxidizer such as air, as well as with cooling, humidification, etc. The fuel cell system 20 may include various components, some of which are shown in FIG. 2.

The vehicle 10 further comprises a controller or control system 30 comprising one or more units, according to an example of the present disclosure. The control system 30 is configured to control operation of subsystems of the fuel cell system 20, as discussed in more detail below. The fuel cell system 20 may be communicatively coupled to the control system 30. In the example of FIG. 1. The fuel cell system 20 is shown to include the control system 30 but the control system 30 may be a component that is separate from the fuel cell system 20 and that is communicatively coupled to the fuel cell system 20. In implementations (not shown) in which the fuel cell system 20 comprises multiple fuel cell systems, each fuel cell system may comprise its own control system. In some implementations, a control system may control operation of multiple control systems.

Even though an on-board control system 30 is shown in FIG. 1, it should be understood that the control system 30 may be a remote control unit, i.e. an off-board control unit, or a combination of an on-board and off-board control unit or units. The control system 30 may be configured to control the fuel cell system 20 by issuing control signals and by receiving status information relating to the fuel cell system 20 and its components. The control system 30 may also be configured to receive information from various sensors, including one or more of pressure sensors, temperature sensors, moisture sensors, and other sensors included in or associated with the fuel cell system 20 and/or the vehicle 10.

The control system 30 may be an electronic control unit and may comprise processing circuitry which is adapted to execute a computer program code or computer-executable instructions as disclosed herein. The control system 30 may comprise hardware, firmware, and/or software for performing methods according to examples of the present disclosure. The control system 30 may be denoted a computer. The control system 30 may be constituted by one or more separate sub-control units. In addition, the control system 30 may communicate by use of wired and/or wireless communication technology.

Furthermore, although the present disclosure is described with respect to a vehicle such as a truck, aspects of the present disclosure are not limited to this particular vehicle, but may also be used in other vehicles such as passenger cars, off-road vehicles, aircrafts and marine vehicles. The present disclosure may also be applied in vessels and in stationary applications, such as in grid-connected supplemental power generators or in grid-independent power generators.

**FIG. 2** shows an example of a fuel cell system in which methods in accordance with aspects of the present disclosure may be implemented, such as the fuel cell system 20 of FIG. 1. The fuel cell system 20 may be a fuel cell system of a vehicle such as the vehicle 10 or any other vehicle. The fuel cell system 20 that comprises a fuel cell stack 22 comprising multiple fuel cells. Operation of the fuel cell system 20 is controlled by a control device or system, such as a control system 30 of FIG. 1. The control system 30 is shown to be part of the fuel cell system 20, but the control system 30 may be separate component communicatively coupled to the fuel cell system 20 and its components such as purge valves discussed below.

In the fuel cell stack 22, an electrolyte, such as e.g. a polymer electrolyte membrane (PEM) (not shown), is sandwiched between two electrodes or catalyst layers - a cathode or cathode subsystem or side 24 and an anode or anode subsystem or side 26. The fuel cell stack 22 also includes a coolant side or subsystem 25 schematically shown in FIG. 2. It should be noted that the cathode side 24, coolant side 25, and anode side 26 are shown schematically, without indicating their boundaries or details of their configuration. A person of skill in the art would understand how to implement a fuel cell stack comprising these subsystems.

As shown in FIG. 2, the cathode side 24 has a cathode inlet 24a and a cathode outlet 24b, the anode side 26 has an anode inlet 26a and an anode outlet 26b, and the coolant subsystem 25 has a coolant inlet 25a and a coolant outlet 25b. Pressure at the anode side 26, sometimes referred to herein as a first pressure, may be measured by first and second anode pressure sensors 16a, 16b disposed at the inlet and outlet of the anode side 26, respectively. Pressure at the cathode side 24, sometimes referred to herein as a second pressure, may be measured by first and second cathode pressure sensors 14a, 14b disposed at the inlet and outlet of the cathode side 24, respectively. Similarly, pressure at the coolant subsystem 25, sometimes referred to herein as a third pressure, may be measured by first and second coolant subsystem pressure sensors 15a, 15b disposed at the inlet and outlet of the coolant subsystem 25, respectively. It should be noted that the pressure sensors at respective inlets and outlets of these systems are shown by way of example only. One or more pressure sensors may be associated with each of the anode side 26, cathode side 24, and the coolant subsystem 25, and the pressure sensors may be disposed in various locations. For example, in some examples, one or more of the anode side 26, cathode side 24, or the coolant subsystem 25 may include a pressure sensor only at the inlet or only at the outlet. Also, in some examples, different pressure sensors and/or different types of pressure sensors may be employed to acquire pressure measurements at the anode side 26, cathode side 24, and the coolant subsystem 25. Thus, aspects in accordance with the present disclosure are not limited to specific types of pressure sensors, or to a number and specific locations of these sensors in relation to subsystems, also referred to as regions, of the fuel cell stack. Any number of pressure sensors configured to acquire pressure measurements from the media flowing through the fuel cell stack 22 may be utilized. Additionally, in some examples, as discussed below, pressure sensors may be absent.

As shown by arrow 34 in FIG. 2, air from the outside environment is supplied to, via an air filter 35, to a compressor 36 that compresses the air based on operating conditions of the fuel cell system 20, e.g., based on a load. The compressor 36 may be an electric turbo compressor (ETC) encompassing a compressor and turbine, and the compressor 36 is configured to be controlled to thereby control the air mass flow to the cathode and thereby indirectly control the pressure at the cathode side 24 of the fuel cell stack 22.

The compressed air exits the compressor 36 and follows, via a charge air cooler 38 and a humidifier 40, and through the cathode inlet 24a, to the cathode side 24 of the fuel cell stack 22. A cathode inlet valve 28 may be disposed between the humidifier 40 and the cathode inlet 24a, as shown in FIG. 2, and the valve 28 may be controlled, in addition to the compressor 36, to regulate the pressure at the cathode side 24. A cathode outlet path 44 extends from the cathode outlet 24b and passes, through a turbine 46, to the outside i.e. atmosphere. A cathode outlet flow exiting the cathode side 24, at the cathode outlet 24b, via the cathode outlet path 44 includes by-products such as water and vapor. Depending on the specific implementation of the fuel cell system 20, the cathode outlet flow may be processed in various ways, e.g., cooled, heated, dried, or otherwise processed before it is expelled, via an exhaust pipe of the vehicle, to the outside.

The fuel cell system 20 comprises a fuel storage device 50 such as one or more hydrogen storage containers or tanks fluidly connected to the anode side 26 of the fuel cell stack 22. The fuel storage device 50 may have any configuration. In some embodiments, the fuel cell system 20 may alternatively or additionally receive hydrogen fuel from a source device configured to generate hydrogen.

Pressure of the hydrogen supplied from the fuel storage device 50 to the anode side 26 may be controlled by a pressure regulation device 52 which is configured to reduce the pressure at the hydrogen stored in the fuel storage device 50. The pressure regulation device 52 may be used to control pressure at the anode side 26, in addition to the valves described herein, as well as other components that may be used (not shown). The hydrogen is supplied to the anode side 26 via the anode inlet 26a. An anode outlet flow exits the anode side 26 via the anode outlet 26b and follows, via an anode outlet path 58, towards the outside. As shown in FIG. 2, the anode outlet flow may be passed through a water separator 54 which collects water extracted, e.g., via cooling and/or other techniques, from the anode outlet flow. The anode outlet flow may be separated into water and hydrogen remaining in the anode outlet flow, and the hydrogen may be supplied, using a hydrogen recirculation pump 55, back to the anode side 26.

As shown in FIG. 2, the anode outlet path 58 includes an anode purge valve 56 which may be a proportional valve configured to be controlled to thereby control pressure at the anode side 26. A degree of opening of the anode purge valve 56 may be controlled in accordance with aspects herein, as discussed throughout the present disclosure. The anode purge valve 56 may be positioned in the anode outlet path 58 extending between the anode outlet 26b of the anode side 26 and the cathode outlet path 44, such that the anode outlet flow may be merged with the cathode outlet flow downstream of the anode purge valve 56. As also shown in FIG. 2, the fuel cell system 20 may comprise a water bypath 61 extending between the water separator 54 and the cathode outlet path 44. A water drain valve 59, also referred to herein as a drain valve 59. may be positioned in the water bypath 61 and may be configured to control pressure at the anode side 26. Both the anode outlet path 58 and the water bypath 61 are fluidly coupled to the cathode outlet path 44 which carries its content to the outside. The water drain valve 59 may be controlled, in addition to the anode purge valve 56, to adjust the pressure at the anode side 26, e.g., in an emergency shutdown.

One or both the anode purge valve 56 and the water drain valve 59, as well as other components such as the pressure regulation device 52, may be controlled to control pressure at the anode side 26. For example, during a normal operation of the fuel cell system 20, the pressure at the anode side 26 may be controlled to remain within the pressure corridor, as discussed in more detail below. The pressure at the anode side 26 may be controlled to remain within the pressure corridor during an emergency shutdown, as also discussed in more detail below.

The air compressor 36 may be controlled, e.g., during a normal operation of the fuel cell system 20, in addition to supplying the required mass flow of oxidant to the fuel cell stack 22 also to control the pressure at the cathode side 24 to remain within the pressure corridor, as discussed in more detail below.

The coolant side or subsystem 25 may include a coolant pump 27 and/or other components such as a source of a coolant e.g., water or another cooling liquid and/or gas or a mixture of liquids, a heater, etc., which are not shown in FIG. 2 for the sake of brevity. In this example, the coolant pump 27 is a component that is used to be controlled and thereby control the coolant mass flow and thereby indirectly control pressure at the coolant subsystem 25. For example, during a normal operation of the fuel cell system 20, the pressure at the coolant subsystem 25 may be controlled to remain within the pressure corridor, as discussed in more detail below.

The control system 30, which may comprise one or more control units, comprises processing circuitry 32 such as one or more processors, and memory 31 configured to store computer-executable instructions that, when executed by the one or more processors, can perform methods in accordance with aspects and examples of the present disclosure. The control system 30 may store, e.g. in the memory 31, acquired sensor data such as pressure sensor data and data acquired from other sensors. The memory 31 may also store data on history of use of the fuel cell system 20. In some implementations, the control unit 30 may acquire data from external data, including from outside of the vehicle 10, e.g., from a remote storage device.

The control system 30 may be configured to control the fuel cell system 20 by issuing control signals and by receiving status information relating to the fuel cell system 20 and its components. Thus, the control system 30 may be configured to control one or more of the anode purge valve 56, the water drain valve 59, the pressure regulation device 52, the air compressor 36, the coolant pump 27, or any other components of the fuel cell system 20 to thereby control pressures at the anode, cathode, and coolant sides. The control system 30 may be configured to receive information from various sensors, such as one or more of pressure sensors, e.g., anode side pressure sensors 16a, 16b, cathode side pressure sensors 14a, 14b, coolant side pressure sensors 15a, 15b, as well as any other sensors that may be present in the fuel cell system 20.

The fuel cell system 20 may include various other components that are not shown in FIG. 2. Also, the fuel cell system 20 may have a different configuration, as the specific configuration is shown in FIG. 2 as an example only. The vehicle including one or more fuel cell systems such as the fuel cell system 20 may include an electric energy storage device such as a battery which may store energy converted by the fuel cell system 20 and/or serve as a source of power/energy to the vehicle, and the fuel cell system 20 may communicate with the battery.

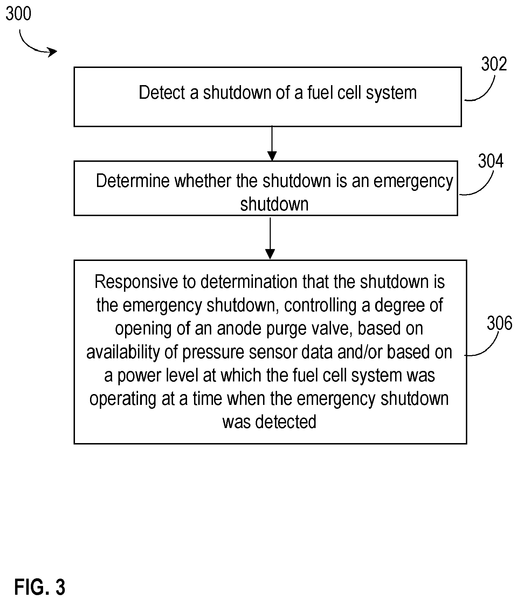

FIG. 3 is a flowchart of an exemplary method or process 300 of controlling operation of a fuel cell system, according to one example. The fuel cell system may be, e.g., fuel cell system 20 of FIGs. 1 and 2, which comprises fuel cell stack 22 comprising anode side 26, a cathode side 24, and an electrolyte between the anode side 26 and the cathode side 24.

The process 300 may be performed by a controller or control unit, such as e.g. control system 30 shown in FIG. 1. The control unit and/or its processing circuitry may monitor a state of the fuel cell system, e.g., by acquiring data from various sensors.

As shown in FIG. 3, at block 302, the process includes detecting a shutdown of the fuel cell system. At block 304, it is determined whether the shutdown is an emergency shutdown. The emergency shutdown may occur due to various reasons such as unexpected events. The fuel cell system and the vehicle that employs the fuel cell system may have emergency shutdown components configured to execute the emergency shutdown of the fuel cell system. The emergency shutdown is different from a normal shutdown in that the emergency shutdown occurs immediately and processes that would normally occur at a shutdown may not occur. At an emergency shutdown, supply of the fuel such as hydrogen, and the oxidant gas such as air is stopped abruptly. Simultaneously, the electric load of the fuel cell stack 22 is also stopped abruptly which in turn also abruptly stops the consumption of fuel and oxidant gas. With the normally closed and recirculated anode outlet path, the fuel is trapped and the pressure at the anode side therefore does not decrease sufficiency quickly, which creates a risk of damage to the fuel cell stack.

At block 306, responsive to determination that the shutdown is the emergency shutdown, the process 300 comprises controlling a degree of opening of an anode purge valve, that is positioned at an anode outlet path extending between an anode outlet of the anode side and a cathode outlet path, based on availability of pressure sensor data i.e. when the pressure sensor data is available and/or based on a power level at which the fuel cell system was operating at a time when the emergency shutdown was detected. The anode purge valve may be, e.g., anode purge valve 56 of FIG. 2. The pressure sensor data may be acquired from a first pressure sensor acquiring pressure measurements at the anode side such as e.g. one or more of anode pressure sensors 16a, 16b, a second pressure sensor acquiring pressure measurements at the cathode side such as e.g. one or more of cathode pressure sensors 14a, 14b, and a third pressure sensor acquiring pressure measurements at a coolant subsystem of the fuel cell system such as e.g. one or more of coolant subsystem pressure sensors 15a, 15b.

The anode purge valve may be a proportional valve or a fast-acting on-off valve that enables release of non-reactive gases and water that accumulate on the anode side. As used herein, controlling the degree of opening of the anode purge valve includes keeping the anode purge valve fully open, fully closed, or keeping the anode purge valve partially open, or at least partially open meaning that the anode purge valve may be open in part or fully open. As used herein, keeping the anode purge valve fully open means that the anode purge valve is controlled to move from a previous configuration to a current, fully open configuration, wherein the previous configuration may be the same or different from the current configuration. In other words, the term "keeping" does not refer to a previous configuration of the anode purge valve, which, e.g. may be open, closed, or partially open, but rather indicates that the anode purge valves becomes to be fully open, regardless of its prior degree of opening. The same applies to keeping the anode purge valve fully closed, which, as used herein, means that the anode purge valve is controlled to move from a previous configuration to a current, fully closed configuration, regardless of the degree of opening in the valve's previous configuration.

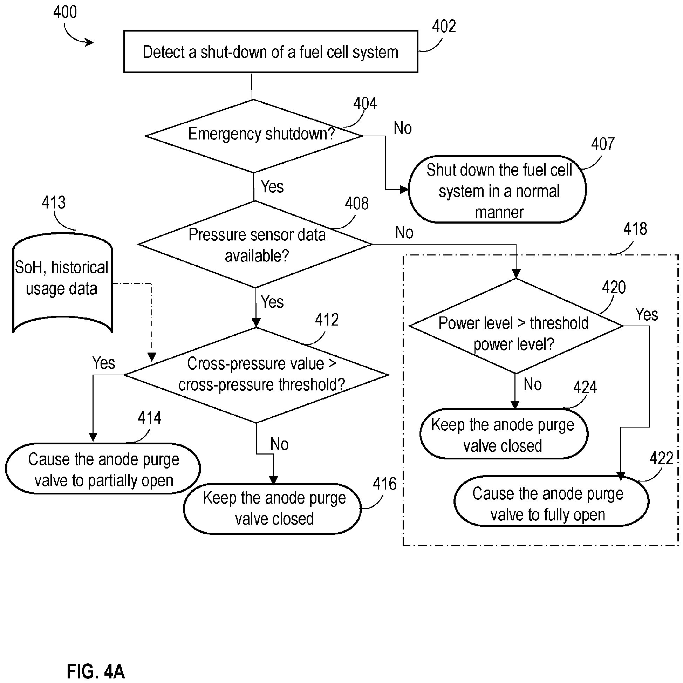

FIG. 4A illustrates an example of a method or process 400 of controlling operation of a fuel cell system, in accordance with aspects of the present disclosure. The fuel cell system may be, e.g., fuel cell system 20 of FIGs. 1 and 2, which comprises fuel cell stack 22 comprising anode side 26 and cathode side 24.

FIG. 4A shows in more detail the process as shown in FIG. 3. Thus, at block 402, the process 400 includes detecting a shutdown of the fuel cell system. At block 404, it is determined whether the shutdown is an emergency shutdown. At block 407, responsive to determination that the shutdown is not an emergency shutdown, the fuel cell system may be shut down in a normal, i.e. controlled manner. For example, the anode purge valve may remain closed.

At block 408, responsive to determination that the shutdown is an emergency shutdown, the process 400 comprises determining, at decision block 408, whether pressure sensor data is available. The pressure sensor data may not be available in cases when, e.g., there are no pressure sensors, one or more of the pressure sensors is malfunctioning and/or when data acquired by the sensor(s) is not reliable.

At block 412, responsive to availability of the pressure sensor data, the process 400 comprises controlling the degree of opening of the anode purge valve, e.g., anode purge valve 56 of FIG. 2, based on the pressure sensor data by comparing a cross-pressure value to a cross-pressure threshold, wherein the cross-pressure value is determined based on the pressure sensor data.

The cross-pressure value may be determined using first pressure at the anode side, second pressure at the cathode side, and third pressure at the coolant subsystem, which may be determined using respective first pressure sensor acquiring pressure measurements at the anode side, second pressure sensor acquiring pressure measurements at the cathode side, and a third pressure sensor acquiring pressure measurements at the coolant subsystem. One or more of each of the first, second, and third pressure sensors may be utilized to acquire respective pressure sensor measurements. The cross-pressure value, which may also be referred to as differential pressure or a pressure differential, may be a difference between a lowest pressure of the first, second, and third pressures, and a highest pressure of the first, second, and third pressures.

The cross-pressure threshold may be defined as a maximum allowed value of cross pressure that is indicative of a pressure built up in the fuel cell system. Thus, if any cross pressure involving e.g. the anode pressure is above that threshold value, the pressure at the anode side is to be reduced by partially or at least partially, i.e. partially or fully, opening the anode purge valve. The cross-pressure threshold is defined by mechanical constraints resulting from the design of the fuel cells themselves, the stacking of the fuel cells and the properties of materials used within the complete stack assembly.

The cross-pressure threshold may be determined dynamically, based on at least one of a state of health (SoH) of the fuel cell system and historical usage data on the fuel cell system, shown schematically at block 413 of FIG. 4A. For example, with a decrease in the SoH, the cross-pressure threshold may be decreased. A SoH may be expressed as a percentage of a remaining lifetime of the fuel cell system, such that 100% SoH means a new system with 100% of remaining lifetime, whereas 0% SoH corresponds to a fuel cell system with zero remaining lifetime or a system that has reached its end of life.

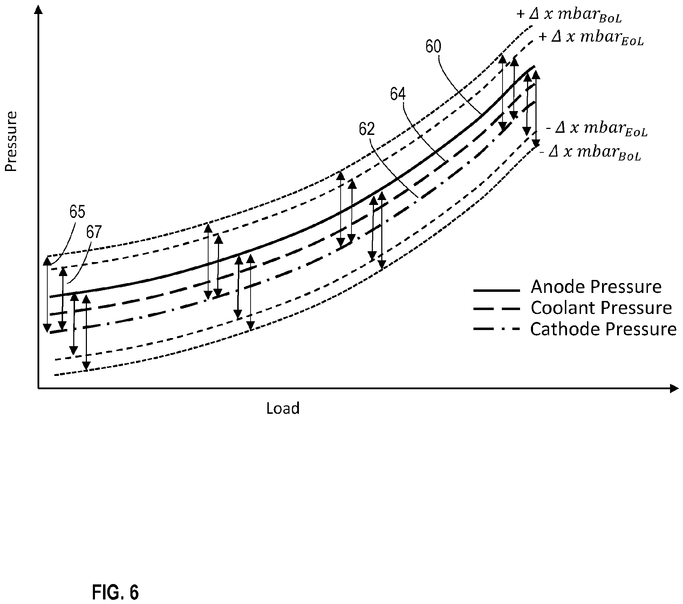

In implementations according to aspects of the present disclosure, the cross-pressure threshold may be used to define an upper pressure value and a lower pressure value of a pressure corridor. An example of the pressure corridor is shown in FIG. 6 which is discussed in more detail below. The upper pressure value of the pressure corridor may comprise a maximum allowed cross pressure for a lowest pressure selected from the first pressure 60 at the anode side, second pressure 62 at the cathode side, and third pressure 64 at the coolant subsystem. The lower pressure value of the pressure corridor comprises a maximum allowed cross pressure for a highest pressure selected from the first pressure 60 at the anode side, second pressure 62 at the cathode side, and third pressure 64 at the coolant subsystem. The system and methods in accordance with the present disclosure allow controlling the degree of opening of the anode purge valve so as to keep the pressure at the anode side to follow, in the controlled manner, the pressures at the cathode side and at the coolant subsystem. Referring back to FIG. 4A, at block 412, responsive to determination that the cross-pressure value is greater than the cross-pressure threshold, the process 400 involves controlling the degree of opening of the anode purge valve by causing the anode purge valve to partially open, at block 414, and thereby cause first pressure at the anode side to reduce which causes the cross-pressure value to reduce below the cross-pressure threshold. The controlling of the degree of opening of the anode purge valve may comprise causing the anode purge valve to partially open to cause the first pressure at the anode side to remain below the upper pressure value of the pressure corridor and above the lower pressure value of the pressure corridor. Thus, upon detection that the cross-pressure value exceeds the cross-pressure threshold, the pressure at the anode side is reduced by controlling the anode purge valve, but the reduction in the pressure occurs so as to avoid a large sudden decrease in the pressure. In some cases, the anode purge valve may be controlled to be at least partially open, e.g., fully open.

In addition, the anode purge valve, once opened, may also be controlled to close and then open again, to return to the full-open degree or state, to allow the fuel cell system, e.g., control device, to control the cross-pressure at the fuel cell stack. For example, in implementations in which the anode purge valve is an on-off valve configured to move between a fully open configuration and a fully closed configuration, such on-off valve may be controlled to close and then open again to control the cross-pressure in the stack.

As shown in FIG. 4A, responsive to determination that the cross-pressure value is smaller than the cross-pressure threshold, the process 400 follows to controlling the degree of opening of the anode purge valve by keeping the anode purge valve closed, at block 416. For example, when at the emergency shutdown the pressure at the anode side, which is typically larger than the pressure at the cathode side or the coolant pressure, does not exceed the cross-pressure threshold, it may not be required to open the anode purge valve. A risk of damage of the fuel cell system may be low in such scenarios.

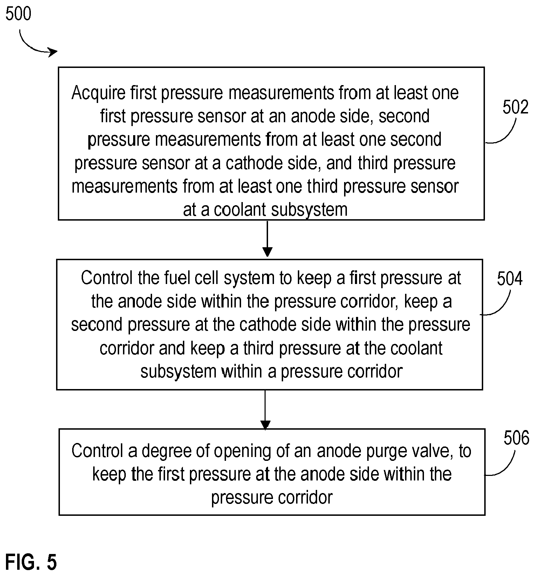

In various examples, prior to detecting the shutdown such as an emergency shutdown, the fuel cell system is controlled to keep the first pressure at the anode side within the pressure corridor, keep the second pressure at the cathode side within the pressure corridor, and keep the third pressure at the coolant subsystem within the pressure corridor. Such control is discussed in more detail below in connection with FIG. 5.

If pressure sensor data is not available or cannot be used, e.g., when it is not reliable, a degree of opening of the anode purge valve may be controlled based on a power level at which the fuel cell system was operating at the time when the emergency shutdown was triggered. Thus, as shown in FIG. 4A, responsive to unavailability of the pressure sensor data i.e. when the pressure sensor data is not available, as determined at block 408, the process 400 branches to a series of blocks collectively labeled as 418.

It should be noted that the processing at blocks 418 may be performed independently of the processing that is performed when the pressure sensor data is available. In other words, in some cases, it may be known that the pressure sensor data is not available, e.g., in a fuel cell system not equipped with pressure sensors, or equipped with a smaller number of sensors such that a cross-pressure value may not be determined. In such cases, there may be no need to determine whether the pressure sensor is available and, responsive to determination that the shutdown is the emergency shutdown, a degree of opening of an anode purge valve is controlled based on a power level at which the fuel cell system was operating at a time when the emergency shutdown was detected. In some implementations, as discussed in more detail below, a degree of opening of a drain valve is controlled in addition to controlling a degree of opening of an anode purge valve.

The controlling of the anode purge valve based on the power level includes comparing the power level to a threshold power level, at block 420. Responsive to determination, at block 420, that the power level is greater than the threshold power level, the degree of opening of the anode purge valve is controlled, at block 422, by causing the anode purge valve to fully open.

Also, responsive to determination that the power level is smaller than the threshold power level, the process 400 comprises controlling the degree of opening of the anode purge valve by keeping the anode purge valve closed, at block 424.

The threshold power level may be determined dynamically, based on at least one of an SoH of the fuel cell system and historical usage data on the fuel cell system. The power level at which the fuel cell system is operating relates to a power request to the fuel cell system from the vehicle and a power generated by the fuel cell system. The control of the anode purge valve opening based on the power level also depends on a configuration of the anode purge valve and parameters such as e.g., an opening area of the valve. Other factors may also affect the power level at which the fuel cell system is operating and a threshold power level.

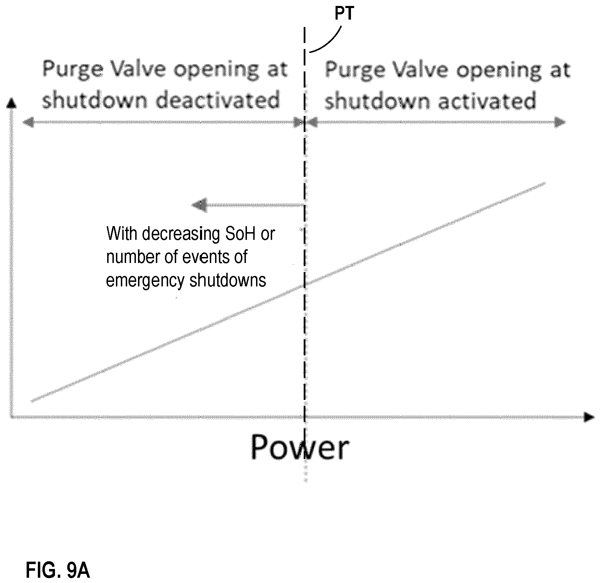

FIG. 9A illustrates a power level (Power at the x axis) at which a fuel cell system is operating, as a function of an SoH of the fuel cell system. The SoH accounts for and depends on a history of use of the fuel cell system such as on a number of events of emergency shutdowns, i.e. how many emergency shutdown events the fuel cell system has experienced. In some examples, a misuse counter may be utilized which keeps track of a number of improper, emergency shutdowns of the fuel cell system. As shown in FIG. 9A, the threshold power level changes with the change in the SoH. A threshold power level PT is shown in FIG. 9A to illustrate a power level above which the anode purge valve opening is activated i.e. the anode purge valve is at least partially open, at the detection of the emergency shutdown. At a power level smaller than the threshold power level PT, the anode purge valve opening is deactivated at the detection of the emergency shutdown.

The control of the anode purge valve based on a power level at which the fuel cell system is operating thus involves opening the anode purge valve fully if the power level is above a threshold power level, to release the hydrogen in a fast manner. It is possible that the reduction in the pressure at the anode side proceed too quickly, i.e. there may be a risk of damage to the fuel cell system. At the same time, because the pressure release will occur quickly, during a short time period, it is an acceptable risk.

In some implementations, as mentioned above, a degree of opening of a drain or water drain valve is controlled in addition to the control of the degree of opening of the anode purge valve. In such cases, opening of the anode purge valve may not be sufficient to reduce the pressure at the anode side sufficiency fast, and the second, drain valve, may be opened to further reduce the pressure at the anode side.

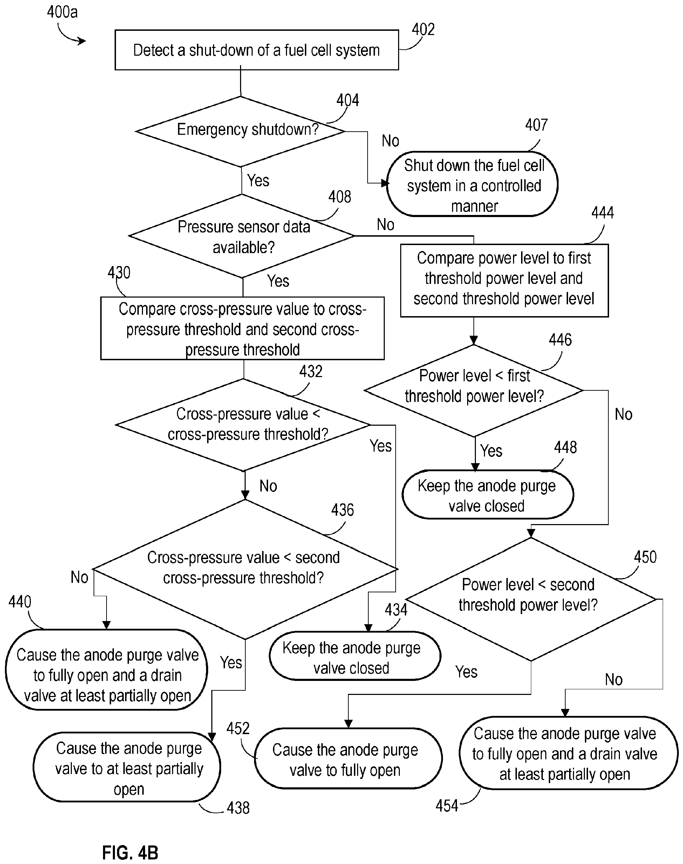

FIG. 4B illustrates a method or process 400a which is similar to the process 400 of FIG. 4A but in which the degree of opening of a drain valve, e.g., drain valve 59 of FIG. 2, may be controlled in addition to the controlling the anode purge valve. The processing at blocks 402, 404, 407, and 408 of FIG. 4B is the same or similar to the processing at the corresponding blocks 402, 404, 407, and 408 of FIG. 4A and is therefore not described in details. Thus, responsive to the detection of the emergency shutdown, at block 404, and further responsive to the determination of availability of the pressure sensor data, at block 408, the process 400a follows to block 430, where a cross-pressure value is compared to a cross-pressure threshold and to a second cross-pressure threshold. The cross-pressure threshold, which may also be referred to a first cross-pressure threshold, is similar to the cross-pressure threshold described in connection with FIG. 4A. The first cross-pressure threshold is smaller than the second cross-pressure threshold. The second cross-pressure threshold may be defined based on a configuration of the anode purge valve and on how quickly the anode purge valve may release the pressure at the anode side. In some examples, the second cross-pressure threshold may be defined as a factor of the first cross-pressure threshold, e.g., about 150% or about 175% or about 200% of the first cross-pressure threshold. In some examples, the second cross-pressure threshold may be defined as a factor of the first cross-pressure threshold, e.g., in a range of from about 120% to about 300%, or from about 150% to about 250%, or from about 150% to about 200%, from about 170% to about 200% of the first cross-pressure threshold. The term "about" means up to plus or minus 10% of a given numerical value. Any of these exemplary values and ranges of values are examples only and are thus not limiting. The specific values will depend on the configuration of the anode purge valve.

The process 400a further comprises, responsive to determination, at block 432, that the cross-pressure value is smaller than the cross-pressure threshold, controlling the degree of opening of the anode purge valve by keeping the anode purge valve closed at block 434.

Responsive to determination, at block 436, that the cross-pressure value is greater than the cross-pressure threshold and smaller than the second cross-pressure threshold, the process 400a comprises controlling the degree of opening of only the anode purge valve among the anode purge and drain valves by causing the anode purge valve to at least partially open, at block 438. The anode purge valve may be opened partially or, in some cases, fully. It should be noted that, as discussed above, other components of the fuel cell system may be involved in controlling the pressure at the anode side, which components are not described herein. Furthermore, responsive to determination, at block 436, that the cross-pressure value is greater than the second cross-pressure threshold i.e. that the cross-pressure value is not between the first and second cross-pressure thresholds, the process 400a involves controlling the degree of opening of the anode purge valve by causing the anode purge valve to fully open and controlling the degree of opening of the drain valve by causing the drain valve to at least partially open, at block 440.

Referring back to block 408 of FIG. 4B, the process 400a comprises, responsive to determination of unavailability of the pressure sensor data, controlling the degree of opening of the anode purge valve and a degree of opening of a drain valve based on the power level at which the fuel cell system was operating at the time when the emergency shutdown was detected. This involves, at block 444, comparing the power level to a first threshold power level and to a second threshold power level that is greater than the first threshold power level. The first threshold power level may be similar to the threshold power level discussed in connection with FIG. 4A. The first threshold power level and the second threshold power level may be determined dynamically, based on at least one of an SoH of the fuel cell system and historical usage data on the fuel cell system.

Further, responsive to determination, at block 446, that the power level is smaller than the first threshold power level, the process 400a comprises controlling the degree of opening of the anode purge valve by keeping the anode purge valve closed, at block 448. Responsive to determination, at block 450, that the power level is greater than the first threshold power level and smaller than the second threshold power level, the process 400a comprises controlling the degree of opening of only the anode purge valve among the anode purge and drain valves by causing the anode purge valve to fully open, at block 452. Further, responsive to determination, at block 450, that the power level is greater than the second threshold power level i.e. that the power level is not between the first and second threshold power levels, controlling the degree of opening of the anode purge valve by causing the anode purge valve to fully open and controlling the degree of opening of the drain valve by causing the drain valve to at least partially open, at block 454.

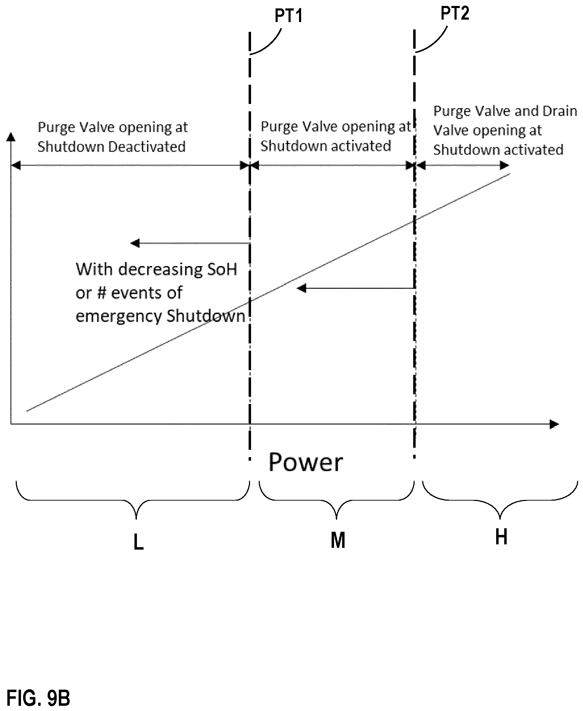

FIG. 9B illustrates, similarly to FIG. 9A discussed above, a power level (Power at the x axis) at which a fuel cell system is operating, as a function of an SoH of the fuel cell system. The SoH accounts for and depends on a history of use of the fuel cell system such as on a number of events of emergency shutdowns, i.e. how many emergency shutdown events the fuel cell system has experienced. In some examples, a misuse counter may be utilized which keeps track of a number of improper, emergency shutdowns of the fuel cell system. As shown in FIG. 9B, the threshold power levels changes with the change in the SoH.

In this example, threshold power levels PT1 and PT2 are shown, wherein the threshold power level PT2 is greater than the threshold power level PT1. Thus, the power range is divided into three regions denoted as L, M, and H, respectively. Thus, in the region L at low loads and power levels, the anode purge valve is not open such that the anode purge valve opening is deactivated at a shutdown such as the emergency shutdown. At medium loads and power levels, in the region M in FIG. 9B, the anode purge valve is at least partially open such that the anode purge valve opening is activated at the emergency shutdown. The drain valve is not open at the medium loads/power levels. At high loads and power levels, in the region H in FIG. 9B, the anode purge valve is at least partially open and also the drain valve is at least partially open.

The load/power limit changes with the SoH of the fuel cell system and a number of events of misuse/emergency shutdown. Also, the exact power levels at which the anode purge and drain valves operate and open is dependent on the configuration of the valves and on a size, such as a diameter, of the opening area of the valve(s).

During operation of the fuel cell system, prior to a shutdown such as an emergency shutdown or a normal shutdown, a control device or unit such as e.g. control system 30 of FIGs. 1 and 2 may operate to control the operation of a fuel cell system to keep the first pressure at the anode side within the pressure corridor, to keep the second pressure at the cathode side within the pressure corridor, and to keep the third pressure at the coolant subsystem within the pressure corridor. An example of such control of the fuel cell system is shown by a method or process 500 in FIG. 5.

At block 502 of FIG. 5, the process 500 comprises acquiring first pressure measurements from at least one first pressure sensor at the anode side, second pressure measurements from at least one second pressure sensor at the cathode side, and third pressure measurements from at least one third pressure sensor at a coolant subsystem of the fuel cell system.

At block 504, the process 500 comprises controlling the fuel cell system to keep a first pressure at the anode side within the pressure corridor, keep the second pressure at the cathode side within the pressure corridor, and keep a third pressure at the coolant subsystem within a pressure corridor that comprises pressure values in a range between an upper pressure value and a lower pressure value. The upper pressure value and the lower pressure value of the pressure corridor are determined dynamically, based on at least one of a state of health (SoH) of the fuel cell system and historical usage data on the fuel cell system.

At block 506, the process 500 may further comprise controlling a degree of opening of an anode purge valve, that is positioned at an anode outlet path extending between an anode outlet of the anode side and a cathode outlet path, to keep a first pressure at the anode side within the pressure corridor. A difference between the lower pressure value and the upper pressure value may decrease with a decrease in the state of health of the fuel cell system. In other words, the pressure corridor narrows or a range of allowed pressure values narrows, as the fuel cell system ages such that its SoH decreases.

The upper pressure value of the pressure corridor may comprise a maximum allowed cross pressure for a lowest pressure selected from the first pressure at the anode side, second pressure at the cathode side, and third pressure at the coolant subsystem. The lower pressure value of the pressure corridor may comprise a maximum allowed cross pressure for a highest pressure selected from the first pressure at the anode side, second pressure at the cathode side, and third pressure at the coolant subsystem.

A control unit such as e.g. the control system 30 for controlling fuel cell system 20 of fuel cell vehicle 10, may be configured to perform the process 500. The fuel cell system 20 may comprise the control system 30. The fuel cell vehicle 10 may comprise the fuel cell system 20 and the control system 30.

In some examples, a computer program product may comprise computer-executable instructions, which, when executed on at least one processor, cause the at least one processor to carry out the process 500. The computer-executable instructions may be stored on a computer-readable storage medium, e.g., one or more memories.

During a normal, i.e. not emergency, operation of a fuel cell system, pressures at an anode side, cathode side, and coolant side are following each other such that they change in a similar manner depending on the load, increasing as the load increases.

FIG. 6 illustrates an example of pressures at an anode side (a solid line 60), a cathode side (a dash-dotted line 62), and a coolant side or subsystem (a dashed line 64), as a function of a load of the fuel cell system. For illustration purposes, the pressure at the anode side can be referred to as a first pressure 60, the pressure at the cathode side can be referred to as a second pressure 62, and the pressure at the coolant subsystem can be referred to as a third pressure 64. The pressure values are obtained based on pressure sensor measurements or data acquired from respective sensors. As shown in the example of FIG. 6, the pressures at the anode side, cathode side, and the coolant side are following each other and increase as the load increases. As also shown in FIG. 6, the first pressure at the anode side, indicated by the solid line 60, is typically larger than the second and third pressures at the cathode and coolant sides, respectively. In this example, the second pressure at the cathode side, indicated by the dash-dotted line 62, is shown to be smaller than the third pressure at the coolant side, indicated by the dashed line 64. However, in various cases, the third pressure at the coolant side may be the lowest of the first, second, and third pressures. Also, depending on a configuration and calibration of a fuel cell system, in some cases, a first pressure at the anode side may be smaller than the second and third pressures at the cathode and coolant sides, respectively.

FIG. 6 illustrates a pressure corridor during the normal operation of the fuel cell system. The two outside, dotted, lines indicate pressure limits of a pressure corridor at a beginning of life (BoL) of the fuel cell system. These lines are denoted as + *Δ x mbar_{BoL}* for upper pressure values of the pressure corridor and - *Δ x mbar_{BoL}* for lower pressure values of the pressure corridor at the beginning of life of the fuel cell system. The two finely dashed lines that are positioned inside and adjacent to the lines indicating the upper pressure and lower pressure values of the pressure corridor at the beginning of life of the fuel cell system, indicate limits for a pressure corridor at an end of life (EoL) of the fuel cell system. These lines are denoted as + *Δ x mbar_{EoL}* for upper pressure values of the pressure corridor and - *Δ x mbar_{EoL}* for lower pressure values of the pressure corridor at the end of life of the fuel cell system. The symbol *Δ* represents the maximum cross-pressure threshold that decreases with the life of the fuel cell system. Thus, it is illustrated that the pressure corridor is wider at the beginning of life of the fuel cell system and narrows towards the end of life of the fuel cell system, i.e. as the SoH of the fuel cell system decreases.

The vertical arrows in FIG. 6 show a distance between the first pressure at the anode side and the upper and lower pressures of the pressure corridor at the beginning of life of the fuel cell system, as well as the upper and lower pressures of the pressure corridor at the end of life of the fuel cell system, at four different places. Similarly, a distance between the second pressure at the cathode side and the upper and lower pressures of the pressure corridor at the beginning of life of the fuel cell system, as well as the upper and lower pressures of the pressure corridor. For each pair of adjacent vertical arrows, e.g., arrows labeled as 65 and 67 in FIG. 6, a length of the longer arrow, 65 in this example, corresponds to *Δ* or a cross-pressure threshold at the beginning of life of the fuel cell system; and a length of the shorter arrow, 67 in this example, corresponds to *Δ* or a cross-pressure threshold at the end of life of the fuel cell system. The length is the same for the respective longer and shorter arrows at all four points.

The upper pressure value of the pressure corridor may comprise a maximum allowed cross pressure for a lowest pressure selected from the first pressure at the anode side, second pressure at the cathode side, and third pressure at the coolant subsystem. The lower pressure value of the pressure corridor comprises a maximum allowed cross pressure for a highest pressure selected from the first pressure at the anode side, second pressure at the cathode side, and third pressure at the coolant subsystem. The maximum allowed cross pressure for each of the first, second and third pressures are determined dynamically, based on the SoH and historical usage data recorded for the fuel cell system.

In the example of FIG. 6, the shapes of the curves for the first pressure (60) at the anode side, the second pressure (62) at the cathode side, and the third pressure (64) at the coolant side may depend on locations of respective pressure sensors. For example, as shown in FIG. 2, pressure sensors can be located at an inlet of the fuel cell stack or at an outlet of the fuel cell stack or at both the inlet and outlet. A choice of sensors from which pressure measurements are acquired may affect the shape of the curves and the specific pressure limits or values for the pressure corridor, but the manner in which the pressure corridor is dynamically determined and in which the control of the pressures is performed does not depend on the specific way in which pressure measurements are acquired.

The fuel cell system is controlled in according to examples herein so that all three first, second and third pressures stay within the pressure corridor. Thus, the system and methods in accordance with the present disclosure allow controlling a degree of opening of an anode purge valve, in some cases also a degree of opening of a drain valve, as well as other components of the fuel cell system, so as to keep the pressure at the anode side, the pressure at the cathode side, and the pressure at the coolant side within the pressure corridor. For example, a control device such as controller 30 in FIGs. 1 and 2 controls the valves and other components to maintain the pressures values within the pressure corridor.

The upper and lower pressure values of the pressure corridor are calculated dynamically, based on a state of health of the fuel cell system and historical use data indicating how the fuel cell system has been used in the past. The historical usage data may record such events as, e.g., that one or more of the first, second, or third pressures reached upper and lower boundaries of the pressure corridor thereby putting stress on the fuel cell system. The historical usage data may also include events of any kind of misuse of the fuel cell system which have caused the media pressure to go closer to the limits or even outside the limits such as e.g. in an emergency shutdown. A number of times that such misuse has happen may be recorded, e.g., as a misuse counter, to quantify the amount of stress that have been put on the fuel cell system, which can affect its SoH. More than one counter may be used to keep track of events that occur during a lifetime of the fuel cell system, to continuously monitor its state, reliability, and performance, and to adjust the limits for the pressure corridor accordingly.

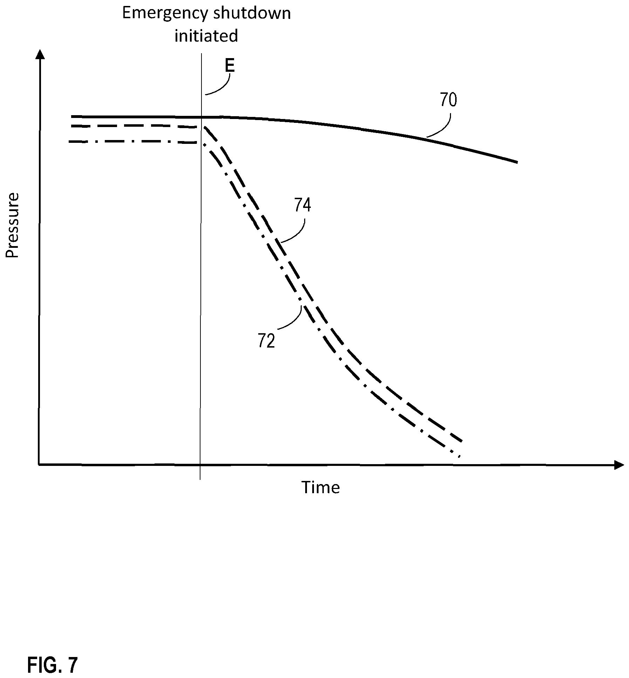

Referring to an event of an emergency shutdown, FIG. 7 illustrates first pressure at an anode side (a solid line 70), second pressure at a cathode side (a dash-dotted line 72), and third pressure at a coolant side or subsystem (a dashed line 74), as a function of time, when a fuel cell system is stopped or shut down at an emergency situation. In the emergency shutdown, it is required to reduce the pressures e.g. anode pressure to low levels in a fast manner. At an emergency shutdown, supply of the fuel such as hydrogen and the oxidant gas such as air is stopped abruptly. Simultaneously, the electric load of the fuel cell stack 22 is also stopped abruptly which in turn abruptly stops the consumption of fuel and oxidant gas. With the normally closed and recirculated anode outlet path, the fuel is trapped and the pressure at the anode side therefore does not decrease sufficiency quickly, which creates a risk of damage to the fuel cell stack. Thus, it is the anode side pressure that typically needs to be reduced fast at an emergency shutdown, since pressures at the cathode and coolant sides reduce fast as corresponding components such as an air compressor and a coolant pump, respectively, cease supplying the oxidant gas and coolant.

As shown in FIG. 7, at a time the emergency shutdown occurs, as shown by a vertical line E, the pressure at the cathode side and the pressure at the coolant subsystem typically drop quite quickly. However, the emergency shutdown leads to a stop of power generation, and the hydrogen that has already entered the anode side may remain there. Thus, reducing the pressure at the anode side in a fast manner is a challenge. FIG. 7 illustrates an example of operation of a fuel cell system without the use of the techniques in accordance with the present disclosure.

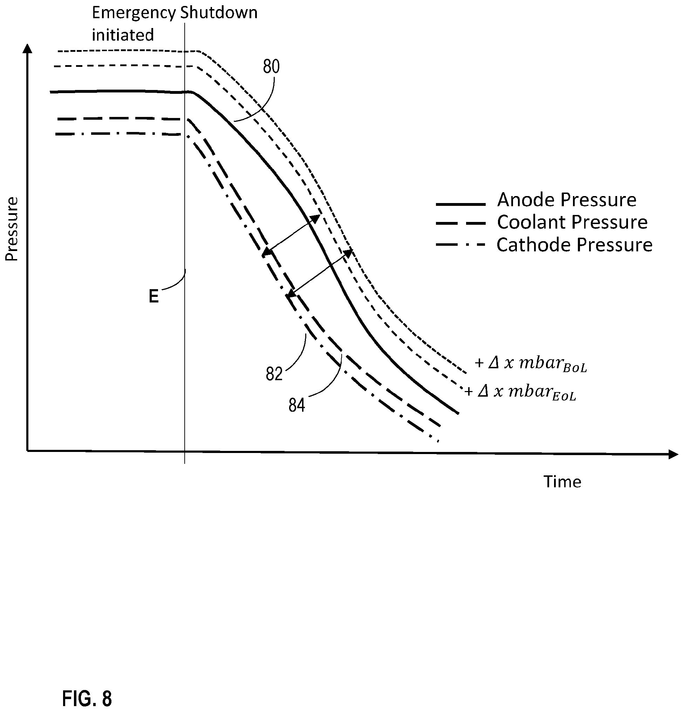

FIG. 8 illustrates an example of operation of a fuel cell system when the techniques in accordance with the present disclosure are utilized. Similar to the example of FIG. 7, FIG. 8 shows first pressure at an anode side (a solid line 80), second pressure at a cathode side (a dash-dotted line 82), and third pressure at a coolant side or subsystem (a dashed line 84), as a function of time, illustrating a case when a fuel cell system is shut down at an emergency situation. As shown in FIG. 8, at a time the emergency shutdown occurs, as shown by a vertical line E, the pressures at all three anode side, cathode side and the coolant side or subsystem can be reduced without exceeding the limits or boundaries of the pressure corridor in a timely manner when the techniques in accordance with the present disclosure are utilized. In particular, the pressure 80 at the anode side is reduced to be below upper pressure values of the pressure corridor. In this example, both the upper pressure values + *Δ x mbar_{BoL}* of the pressure corridor at the beginning of life of the fuel cell system, and the upper pressure values + *Δ x mbar_{EoL}* of the pressure corridor at the end of life of the fuel cell system are shown. For illustration purposes only, the solid curve illustrating the pressure 80 at the anode side is shown to extend below both of respective upper pressure values or limits of the pressure corridor at the beginning of life and at the end of life of the fuel cell system. It should be noted however that, depending on a state of the fuel cell system, i.e. its SoH, the pressure at the anode side may be controlled to remain below the upper pressure values + *Δ x mbar_{BoL}* at the beginning of life of the fuel cell system, or below the upper pressure values + *Δ x mbar_{EoL}* at the end of life of the fuel cell system. The lower pressure values or limits of the pressure corridor are not shown in FIG. 8, and it should be understood that the pressure at the anode side will also be controlled to remain above the lower pressure values, at any time point following an occurrence of the emergency shutdown. The anode purge valve may be a proportional valve. In some examples, the anode purge valve may be a fast acting on-off valve. In some examples, the fast acting on-off valve may be controlled to be fully open and then to fully close again in a fast manner, to ensure that the anode side pressure stays within the pressure corridor.

The anode purge valve may be controlled not to be fully open, or not to be fully open immediately, but to have a certain degree of opening, to remain above the lower limit of the pressure corridor, in order to prevent the anode purge valve from releasing the pressure at the anode side too quickly and thereby causing damage to the fuel cell system. In addition, the anode purge valve, once at least partially opened, may also be controlled to close and then open again, to move to the same or different degree of opening, to allow the fuel cell system, e.g., control device, to determine a current cross-pressure at the fuel cell stack. It should also be noted that the upper and lower pressure values or limits of the pressure corridor are adjusted dynamically, such that they may vary with time. The upper and lower pressure values may vary depending on behavior of the air compressor such as e.g. an ETC and the coolant pump and may be different for different fuel cell systems. Also, the upper and lower pressure values may be different based on operating points.

Accordingly, the systems and methods in accordance with aspects of the present disclosure allow controlling or adjusting a pressure at the anode side of the fuel cell stack of the fuel cell system, to advantageously avoid damage to the fuel cell system due to excessively high pressure at the anode side at abnormal e.g. emergency shutdowns. In this way, the fuel cell system is controlled to react quickly to emergency shutdowns, in the manner that greatly reduces a typically large negative effect of an abnormal shutdown on properties of the fuel cell system. For example, a risk of a potential damage, e.g., occurrence of cracks, to a bipolar plate of a proton exchange membrane (PEM) of a fuel cell in a fuel cell stack is reduced or eliminated. The bipolar plate is a component that connects each fuel cell electrically, supplies reactant gases, and removes reaction by-products from the cell. Thus, reducing a risk of damage to the bipolar plate, which may otherwise occur, extends a lifetime of the fuel cell system and increases its durability and reliability.

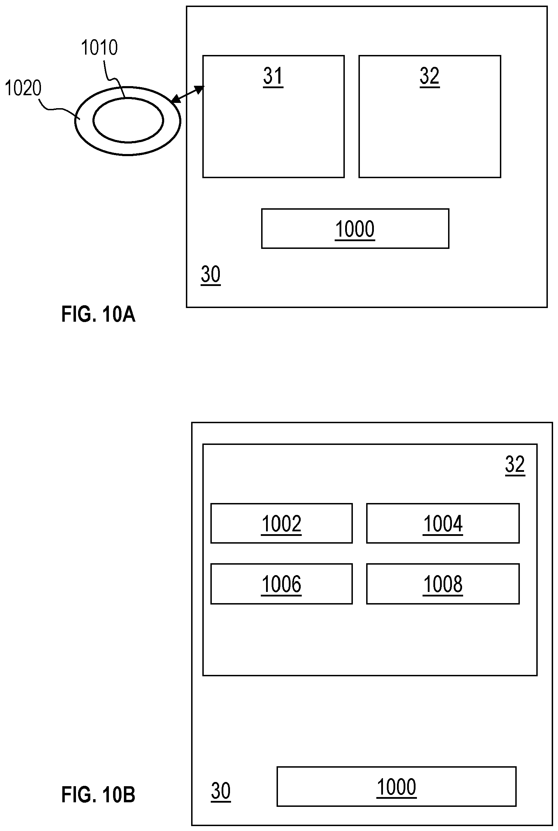

Methods of controlling operation of the fuel cell system as described herein, in accordance with aspects of the present disclosure, may be performed by a control device such as, e.g., a control system of a fuel cell system. FIGs. 1 and 2 show an example of a control system such as control system 30 in which some aspects may be implemented. FIGs. 10A and 10B additionally illustrate an example of an arrangement of the control system 30 for implementing examples disclosed herein.

As shown in FIG. 10A, the control system 30 may comprise processing circuitry 32, memory 31, and an input and output interface 1000 configured to communicate with any necessary components and/or entities of examples herein. The input and output interface 1000 may comprise a wireless and/or wired receiver and a wireless and/or wired transmitter. The input and output interface 1000 may comprise a wireless and/or wired transceiver. The control system 30 may be positioned in any suitable location of the vehicle 10. The control system 30 may use the input and output interface 1000 to control and communicate with sensors such as e.g. pressure sensor and any other sensors, actuators, subsystems, and interfaces in the vehicle 10 by using any one or more out of a Controller Area Network (CAN), ethernet cables, Wi-Fi, Bluetooth, and other network interfaces.

The methods described herein may be implemented using processing circuitry, e.g., one or more processors, such as the processing circuitry 32 of the control system 30, together with computer program code stored in a computer-readable storage medium for performing the functions and actions of the examples herein.

The memory 31 may comprise one or more memory units. The memory 31 comprises computer-executable instructions executable by the processing circuitry 32 of the control system 30. The memory 31 is configured to store, e.g., information, data, etc., and the computer-executable instructions to perform the methods in accordance with embodiments herein when executed by the processing circuitry 32. The control system 30 may additionally obtain information from an external memory. The control system 30 may store e.g. in the memory 31 acquired sensor data such as pressure sensor data and data acquired from other sensors. The control system 30 may also store historical usage data related to operation of the fuel cell system and its various components.

The methods according to the aspects of the present disclosure may be implemented by means of e.g. a computer program product 1010 or a computer program, comprising computer-executable instructions, i.e., software code portions, which, when executed on at least one processor, e.g., the processing circuitry 32, cause the at least one processor to carry out the actions described herein, as performed by the control system 30.

In some examples, the computer program product 1010 is stored on a computer-readable storage medium 1020. The computer-readable storage medium 1020 may be, e.g., a disc, a universal serial bus (USB) stick, or similar. The computer-readable storage medium 1020, having stored thereon the computer program product, may comprise the instructions which, when executed on at least one processor, e.g., the processing circuitry 32, cause the at least one processor to carry out the actions of the method described herein, as performed by the control system 30.

As shown in FIG. 10B, the control system 30 may comprise a detecting unit 1002. The control system 30, the processing circuitry 32, and/or the detecting unit 1002 are configured to detect a shutdown of the fuel cell system. The control system 30, the processing circuitry 32, and/or the detecting unit 1002 may further be configured to determine whether the shutdown is an emergency shutdown.

The control system 30 may also comprise a controlling unit 1004. The control system 30, the processing circuitry 32, and/or the controlling unit 1004 are configured to, responsive to determination that the shutdown is the emergency shutdown, control a degree of opening of an anode purge valve, that is positioned at an anode outlet path extending between an anode outlet of the anode side and a cathode outlet path, based on availability of pressure sensor data and/or based on a power level at which the fuel cell system was operating at a time when the emergency shutdown was detected. The pressure sensor data may be acquired from a first pressure sensor acquiring pressure measurements at the anode side, a second pressure sensor acquiring pressure measurements at the cathode side, and a third pressure sensor acquiring pressure measurements at a coolant subsystem of the fuel cell system.

The control system 30, the processing circuitry 32, and/or the controlling unit 1004 may further be configured to, responsive to availability of the pressure sensor data i.e. when the pressure sensor data is available, control the degree of opening of the anode purge valve based on the pressure sensor data by: comparing a cross-pressure value to a cross-pressure threshold, wherein the cross-pressure value is determined based on the pressure sensor data; responsive to determination that the cross-pressure value is greater than the cross-pressure threshold, controlling the degree of opening of the anode purge valve by causing the anode purge valve to partially open to thereby cause first pressure at the anode side reduce to below the cross-pressure threshold; and responsive to determination that the cross-pressure value is smaller than the cross-pressure threshold, controlling the degree of opening of the anode purge valve by keeping the anode purge valve closed.

The control system 30, the processing circuitry 32, and/or the controlling unit 1004 may further be configured to, responsive to availability of the pressure sensor data, controlling the degree of opening of the anode purge valve and a degree of opening of a drain valve based on the pressure sensor data by: comparing a cross-pressure value to a cross-pressure threshold and to a second cross-pressure threshold, wherein the cross-pressure value is determined based on the pressure sensor data; responsive to determination that the cross-pressure value is smaller than the cross-pressure threshold, controlling the degree of opening of the anode purge valve by keeping the anode purge valve closed; responsive to determination that the cross-pressure value is greater than the cross-pressure threshold and smaller than the second cross-pressure threshold, controlling the degree of opening of only the anode purge valve among the anode purge and drain valves by causing the anode purge valve to at least partially open; and responsive to determination that the cross-pressure value is greater than the second cross-pressure threshold, controlling the degree of opening of the anode purge valve by causing the anode purge valve to fully open and controlling the degree of opening of the drain valve by causing the drain valve to at least partially open.

In some examples, the cross-pressure threshold may be determined dynamically, based on at least one of a state of health, SoH, of the fuel cell system and historical usage data on the fuel cell system. In some examples, the cross-pressure threshold may be used to define an upper pressure value and a lower pressure value of a pressure corridor.

The control system 30, the processing circuitry 32, and/or the controlling unit 1004 may further be configured to controlling the degree of opening of the anode purge valve by causing the anode purge valve to partially open to cause the first pressure at the anode side to remain below the upper pressure value of the pressure corridor and above the lower pressure value of the pressure corridor.

In some examples, the upper pressure value comprises a maximum allowed cross pressure for a lowest pressure selected from the first pressure at the anode side, second pressure at the cathode side, and third pressure at the coolant subsystem.

In some examples, the lower pressure value comprises a minimum allowed cross pressure for a highest pressure selected from the first pressure at the anode side, second pressure at the cathode side, and third pressure at the coolant subsystem.

In some examples, the second cross-pressure threshold is determined based on the cross-pressure threshold.

In some examples, as shown in FIG. 10B, the control system 30 may also comprise a comparing unit 1006. The control system 30, the processing circuitry 32, and/or the comparing unit 1006 may be configured to compare a cross-pressure value to a cross-pressure threshold com. The control system 30, the processing circuitry 32, and/or the comparing unit 1006 may also be configured to compare a cross-pressure value to a cross-pressure threshold and to a second cross-pressure threshold, wherein the cross-pressure value is determined based on the pressure sensor data. Although not shown in FIG. 10B, the comparing unit 1006 may be a subunit of the controlling unit 1004.

In some aspects, the control system 30, the processing circuitry 32, and/or the controlling unit 1004 may further be configured to, prior to detecting the shutdown, control the fuel cell system to keep the first pressure at the anode side within the pressure corridor, keep the second pressure at the cathode side within the pressure corridor, and keep the third pressure at the coolant subsystem within the pressure corridor.

In some aspects, the control system 30, the processing circuitry 32, and/or the controlling unit 1004 may be configured to, responsive to unavailability of the pressure sensor data i.e. when the pressure sensor data is not available, controlling the degree of opening of the anode purge valve based on the power level at which the fuel cell system was operating at the time when the emergency shutdown was detected, the controlling comprising: comparing the power level to a threshold power level; responsive to determination that the power level is greater than the threshold power level, controlling the degree of opening of the anode purge valve by causing the anode purge valve to fully open; and responsive to determination that the power level is smaller than the threshold power level, controlling the degree of opening of the anode purge valve by keeping the anode purge valve closed.

The threshold power level may be determined dynamically, based on at least one of a state of health, SoH, of the fuel cell system and historical usage data on the fuel cell system.

In some aspects, the control system 30, the processing circuitry 32, and/or the controlling unit 1004 may be configured to, responsive to unavailability of the pressure sensor data, controlling the degree of opening of the anode purge valve and a degree of opening of a drain valve based on the power level at which the fuel cell system was operating at the time when the emergency shutdown was detected, the controlling comprising: comparing the power level to a first threshold power level and to a second threshold power level that is greater than the first threshold power level; responsive to determination that the power level is smaller than the first threshold power level, controlling the degree of opening of the anode purge valve by keeping the anode purge valve closed; responsive to determination that the power level is greater than the first threshold power level and smaller than the second threshold power level, controlling the degree of opening of only the anode purge valve among the anode purge and drain valves by causing the anode purge valve to fully open; and responsive to determination that the power level is greater than the second threshold power level, controlling the degree of opening of the anode purge valve by causing the anode purge valve to fully open and controlling the degree of opening of the drain valve by causing the drain valve to at least partially open.

The first threshold power level and the second threshold power level may be determined dynamically, based on at least one of a state of health, SoH, of the fuel cell system and historical usage data on the fuel cell system.

In some examples, the control system 30, the processing circuitry 32, and/or the comparing unit 1006 may be configured to compare the power level to a threshold power level. In some examples, the control system 30, the processing circuitry 32, and/or the comparing unit 1006 may be configured to compare the power level to a first threshold power level and to a second threshold power level that is greater than the first threshold power level.

In some examples, as shown in FIG. 10B, the control system 30 may also comprise an acquiring unit 1008. The control system 30, the processing circuitry 32, and/or the acquiring unit 1008 may be configured to acquire pressure sensor data and any other data related to operation of the fuel cell system. Thus, the control system 30, the processing circuitry 32, and/or the acquiring unit 1008 may be configured to acquire first pressure measurements from at least one first pressure sensor at the anode side, second pressure measurements from at least one second pressure sensor at the cathode side, and third pressure measurements from at least one third pressure sensor at a coolant subsystem of the fuel cell system.

In some aspects, the control system 30, the processing circuitry 32, and/or the controlling unit 1004 are configured to control the fuel cell system to keep a first pressure at the anode side within the pressure corridor, keep a second pressure at the cathode side within the pressure corridor, and keep a third pressure at the coolant subsystem within a pressure corridor that comprises pressure values in a range between an upper pressure value and a lower pressure value, wherein the upper pressure value and the lower pressure value of the pressure corridor are determined dynamically, based on at least one of a state of health, SoH, of the fuel cell system and historical usage data on the fuel cell system.

The control system 30, the processing circuitry 32, and/or the controlling unit 1004 are configured to control a degree of opening of an anode purge valve, that is positioned at an anode outlet path extending between an anode outlet of the anode side and a cathode outlet path, to keep the first pressure at the anode side within the pressure corridor.

Although FIG. 10B shows units such as detecting unit 1002, controlling unit 1004, comparing unit 1006, and acquiring unit 1008 as being within the processing circuitry 32 of the control unit 30, each of these units may be implemented such that at least a portion of the unit is stored in a corresponding memory, e.g. memory 31 of the control system 30 or in a different storage device. The units may be implemented in hardware, firmware, or in a combination of hardware and/or firmware, and software within the processing circuitry

In some examples, a difference between the lower pressure value and the upper pressure value may decrease with a decrease in the state of health of the fuel cell system.

In some examples, the upper pressure value of the pressure corridor comprises a maximum allowed cross pressure for a lowest pressure selected from the first pressure at the anode side, second pressure at the cathode side, and third pressure at the coolant subsystem. In some examples, the lower pressure value of the pressure corridor comprises a maximum allowed cross pressure for a highest pressure selected from the first pressure at the anode side, second pressure at the cathode side, and third pressure at the coolant subsystem.

Those skilled in the art will appreciate that the units in the control system 30 described above may refer to a combination of analogue and digital circuits, and/or one or more processors configured with software and/or firmware, e.g., stored in the controller 116, that, when executed by the respective one or more processors such as the processors described above, may carry out the actions or steps of the method(s) in accordance with the present disclosure. One or more of these processors, as well as the other digital hardware, may be included in a single Application-Specific Integrated Circuitry (ASIC), or several processors and various digital hardware may be distributed among several separate components, whether individually packaged or assembled into a system-on-a-chip.

The operational steps described in any of the exemplary aspects herein are described to provide examples and discussion. The steps may be performed by hardware components, may be embodied in machine-executable instructions to cause a processor to perform the steps, or may be performed by a combination of hardware and software. Although a specific order of method steps may be shown or described, the order of the steps may differ. In addition, two or more steps may be performed concurrently or with partial concurrence.

In examples herein, during its normal operation, a fuel cell system may be controlled to maintain a pressure at the anode side, a pressure at the cathode side, and a pressure at the coolant side or subsystem within a certain adjustable pressure referred to herein as a pressure corridor. Examples below relate to such control of the fuel cell system.

In examples here, during its normal operation, a fuel cell system may be controlled to maintain a pressure at the anode side, a pressure at the cathode side, and a pressure at the coolant side or subsystem within a certain adjustable pressure referred to herein as a pressure corridor. Examples below relate to such control of the fuel cell system.

Example 1. A method of controlling operation of a fuel cell system comprising a fuel cell stack for generating power and comprising an anode side and a cathode side, the method comprising:
acquiring first pressure measurements from at least one first pressure sensor at the anode side, second pressure measurements from at least one second pressure sensor at the cathode side, and third pressure measurements from at least one third pressure sensor at a coolant subsystem of the fuel cell system; and
controlling the fuel cell system to keep a first pressure at the anode side within the pressure corridor, keep a second pressure at the cathode side within the pressure corridor, and keep a third pressure at the coolant subsystem within a pressure corridor that comprises pressure values in a range between an upper pressure value and a lower pressure value,
wherein the upper pressure value and the lower pressure value of the pressure corridor are determined dynamically, based on at least one of a state of health, SoH, of the fuel cell system and historical usage data on the fuel cell system.

Example 2. The method according to example 1, further comprising controlling a degree of opening of an anode purge valve, that is positioned at an anode outlet path extending between an anode outlet of the anode side and a cathode outlet path, to keep the first pressure at the anode side within the pressure corridor.

Example 3. The method according to example or 2, wherein a difference between the lower pressure value and the upper pressure value decreases with a decrease in the state of health of the fuel cell system.

Example 4. The method according to any one of examples 1 to 3, wherein the upper pressure value comprises a maximum allowed cross pressure for a lowest pressure selected from the first pressure at the anode side, the second pressure at the cathode side, and the third pressure at the coolant subsystem.

Example 5. The method according to any one of examples 1 to 4, wherein the lower pressure value comprises a maximum allowed cross pressure for a highest pressure selected from the first pressure at the anode side, the second pressure at the cathode side, and the third pressure at the coolant subsystem.

Example 6. A control system (30) comprising one or more control units configured to perform the method according to any one of examples 1 to 5.

Example 7. A fuel cell system (20) comprising the control unit (30) of example 6.

Example 8. A fuel cell system (20) configured to communicate with the control unit (30) of example 6.

Example 9. A fuel cell vehicle (10) comprising the fuel cell system (20) of example 7 or 8 and/or being in communication with the control unit (30) of example 6.

Example 10. A computer program product comprising instructions, which, when executed on at least one processor, cause the at least one processor to carry out the method according to any one of examples 1 to 5.

Example 11. A computer-readable storage medium, having stored thereon a computer program product comprising instructions which, when executed on at least one processor, cause the at least one processor to carry out the method according to any one of examples 1 to 5.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A method (300) of controlling operation of a fuel cell system comprising a fuel cell stack for generating power and comprising an anode side and a cathode side, the method comprising:
detecting (302) a shutdown of the fuel cell system;
determining (304) whether the shutdown is an emergency shutdown; and
responsive to determination that the shutdown is the emergency shutdown, controlling (306) a degree of opening of an anode purge valve (56), that is positioned at an anode outlet path extending between an anode outlet of the anode side and a cathode outlet path, based on pressure sensor data when the pressure sensor data is available and based on a power level at which the fuel cell system was operating at a time when the emergency shutdown was detected,
wherein the pressure sensor data is acquired from a first pressure sensor acquiring pressure measurements at the anode side, a second pressure sensor acquiring pressure measurements at the cathode side, and a third pressure sensor acquiring pressure measurements at a coolant subsystem of the fuel cell system.

2. The method of claim 1, comprising, responsive to availability of the pressure sensor data, controlling the degree of opening of the anode purge valve based on the pressure sensor data by:
comparing (412) a cross-pressure value to a cross-pressure threshold, wherein the cross-pressure value is determined based on the pressure sensor data;
responsive to determination that the cross-pressure value is greater than the cross-pressure threshold, controlling (414) the degree of opening of the anode purge valve by causing the anode purge valve to partially open to thereby cause first pressure at the anode side to reduce which causes the cross-pressure value to reduce below the cross-pressure threshold; and
responsive to determination that the cross-pressure value is smaller than the cross-pressure threshold, controlling (416) the degree of opening of the anode purge valve by keeping the anode purge valve closed.

3. The method of claim 1, comprising, responsive to availability of the pressure sensor data, controlling the degree of opening of the anode purge valve and a degree of opening of a drain valve (59) based on the pressure sensor data by:
comparing (430, 432) a cross-pressure value to a cross-pressure threshold and to a second cross-pressure threshold, wherein the cross-pressure value is determined based on the pressure sensor data;
responsive to determination that the cross-pressure value is smaller than the cross-pressure threshold, controlling (434) the degree of opening of the anode purge valve by keeping the anode purge valve closed;
responsive to determination that the cross-pressure value is greater than the cross-pressure threshold and smaller than the second cross-pressure threshold, controlling (438) the degree of opening of only the anode purge valve among the anode purge and drain valves by causing the anode purge valve to at least partially open; and
responsive to determination that the cross-pressure value is greater than the second cross-pressure threshold, controlling (440) the degree of opening of the anode purge valve (56) by causing the anode purge valve to fully open and controlling the degree of opening of the drain valve (59) by causing the drain valve to at least partially open.

4. The method of claim 1 or 2, wherein the cross-pressure threshold is determined dynamically, based on at least one of a state of health, SoH, of the fuel cell system and historical usage data on the fuel cell system.

5. The method of any one of claims 2 to 4, wherein the cross-pressure threshold is used to define an upper pressure value and a lower pressure value of a pressure corridor.

6. The method of claim 5, further comprising controlling the degree of opening of the anode purge valve by causing the anode purge valve to partially open to cause the first pressure at the anode side to remain below the upper pressure value of the pressure corridor and above the lower pressure value of the pressure corridor.

7. The method of claim 5 or 6, wherein the upper pressure value comprises a maximum allowed cross pressure for a lowest pressure selected from the first pressure at the anode side, second pressure at the cathode side, and third pressure at the coolant subsystem.

8. The method of any one of claims 5 to 7, wherein the lower pressure value comprises a maximum allowed cross pressure for a highest pressure selected from the first pressure at the anode side, second pressure at the cathode side, and third pressure at the coolant subsystem.

9. The method of any one of claims 7 to 8, wherein, prior to detecting the shutdown, the fuel cell system is controlled to keep the first pressure at the anode side within the pressure corridor, keep the second pressure at the cathode side within the pressure corridor, and keep the third pressure at the coolant subsystem within the pressure corridor.

10. The method of claim 1, comprising, when the pressure sensor data is not available, controlling the degree of opening of the anode purge valve based on the power level at which the fuel cell system was operating at the time when the emergency shutdown was detected, the controlling comprising:
comparing (420) the power level to a threshold power level;
responsive to determination that the power level is greater than the threshold power level, controlling (422) the degree of opening of the anode purge valve by causing the anode purge valve to fully open; and
responsive to determination that the power level is smaller than the threshold power level, controlling (424) the degree of opening of the anode purge valve by keeping the anode purge valve closed.

11. The method of claim 1, further comprising, when the pressure sensor data is not available, controlling the degree of opening of the anode purge valve and a degree of opening of a drain valve based on the power level at which the fuel cell system was operating at the time when the emergency shutdown was detected, the controlling comprising:
comparing (444, 446) the power level to a first threshold power level and to a second threshold power level that is greater than the first threshold power level;
responsive to determination that the power level is smaller than the first threshold power level, controlling (448) the degree of opening of the anode purge valve by keeping the anode purge valve closed;
responsive to determination that the power level is greater than the first threshold power level and smaller than the second threshold power level, controlling (452) the degree of opening of only the anode purge valve among the anode purge and drain valves by causing the anode purge valve to fully open; and
responsive to determination that the power level is greater than the second threshold power level, controlling (454) the degree of opening of the anode purge valve by causing the anode purge valve to fully open and controlling (454) the degree of opening of the drain valve by causing the drain valve to at least partially open.

12. A fuel cell system (20) in a fuel cell vehicle (10), the fuel cell system (20) comprising:
a fuel cell stack (22) for generating power and comprising an anode side (26) and a cathode side (24); and
a control system (30) comprising at least one processor (32) that is configured to:
detect a shutdown of the fuel cell system;
determine whether the shutdown is an emergency shutdown; and
responsive to determination that the shutdown is the emergency shutdown, control a degree of opening of an anode purge valve (56), that is positioned at an anode outlet path (58) extending between an anode outlet (26b) of the anode side (26) and a cathode outlet path (44), based on pressure sensor data when the pressure sensor data is available and based on a power level at which the fuel cell system was operating at a time when the emergency shutdown was detected,
wherein the pressure sensor data is acquired from a first pressure sensor (16a, 16b) acquiring pressure measurements at the anode side (26), a second pressure sensor (14a, 14b) acquiring pressure measurements at the cathode side (24), and a third pressure sensor (15a, 15b) acquiring pressure measurements at a coolant subsystem (25) of the fuel cell system.

13. The fuel cell system of claim 12, wherein the processor of the control system is configured to, responsive to availability of the pressure sensor data, control the degree of opening of the anode purge valve based on the pressure sensor data by:
comparing a cross-pressure value to a cross-pressure threshold, wherein the cross-pressure value is determined based on the pressure sensor data;
responsive to determination that the cross-pressure value is greater than the cross-pressure threshold, controlling the degree of opening of the anode purge valve by causing the anode purge valve to partially open to thereby cause pressure at the anode side to reduce which causes the cross-pressure value to reduce below the cross-pressure threshold; and
responsive to determination that the cross-pressure value is smaller than the cross-pressure threshold, controlling the degree of opening of the anode purge valve by keeping the anode purge valve closed.

14. The fuel cell system of claim 12, wherein the processor of the control system is configured to, responsive to availability of the pressure sensor data, control the degree of opening of the anode purge valve and a degree of opening of a drain valve based on the pressure sensor data by:
comparing a cross-pressure value to a cross-pressure threshold and to a second cross-pressure threshold, wherein the cross-pressure value is determined based on the pressure sensor data;
responsive to determination that the cross-pressure value is smaller than the cross-pressure threshold, controlling the degree of opening of the anode purge valve by keeping the anode purge valve closed;
responsive to determination that the cross-pressure value is greater than the cross-pressure threshold and smaller than the second cross-pressure threshold, controlling the degree of opening of only the anode purge valve among the anode purge and drain valves by causing the anode purge valve to at least partially open; and
responsive to determination that the cross-pressure value is greater than the second cross-pressure threshold, controlling the degree of opening of the anode purge valve by causing the anode purge valve to fully open and controlling the degree of opening of the drain valve by causing the drain valve to at least partially open; and/or
wherein the cross-pressure threshold is determined dynamically, based on at least one of a state of health, SoH, of the fuel cell system and historical usage data on the fuel cell system; and/or
wherein the cross-pressure threshold is used to define an upper pressure value and a lower pressure value of a pressure corridor.

15. The fuel cell system of claim 12, wherein the processor of the control system is further configured to, when the pressure sensor data is not available, control the degree of opening of the anode purge valve based on the power level at which the fuel cell system was operating at the time when the emergency shutdown was detected, the controlling comprising:
comparing the power level to a threshold power level;
responsive to determination that the power level is greater than the threshold power level, controlling the degree of opening of the anode purge valve by causing the anode purge valve to fully open; and
responsive to determination that the power level is smaller than the threshold power level, controlling the degree of opening of the anode purge valve by keeping the anode purge valve closed.

16. A control system (30) for controlling a fuel cell system (20) of a fuel cell vehicle (10), the control system (30) being configured to perform the method of any one of claims 1 to 11.

17. A fuel cell vehicle (10) comprising the fuel cell system (20) of any one of claims 12-15.
